# EUROPÄISCHE PATENTANMELDUNG

(11) **EP 3 895 547 A1**
(43) Veröffentlichungstag der Anmeldung: **20.10.2021**
(21) Anmeldenummer: 21157544.4
(22) Anmeldetag: 17.02.2021
(51) Int. Cl.: A23L 2/54, B01D 19/00

(54) **HERSTELLUNG KARBONISIERTER GETRÄNKE**

(30) Priorität: 17.04.2020 DE 102020110502
(71) Anmelder: Krones AG, 93073 Neutraubling (DE)
(72) Erfinder: WEIGL, Markus, 93073 Neutraubling (DE); ENGEL, Erwin, 93073 Neutraubling (DE); SCHERER, Christoph Hans, 93073 Neutraubling (DE); FEILNER, Roland, 93073 Neutraubling (DE); JUSTL, Johanna, 93073 Neutraubling (DE); OEHMICHEN, Thomas, 93073 Neutraubling (DE); RICHTER, Volker, 93073 Neutraubling (DE)
(74) Vertreter: Grünecker Patent- und Rechtsanwälte PartG mbB

(57) **Zusammenfassung**

Die vorliegende Erfindung stellt ein Verfahren zur Herstellung eines karbonisierten Getränks, mit den Schritten: Bereitstellen von sauerstoffreduziertem Wasser; Mischen des sauerstoffreduzierten Wassers mit einer Mischungskomponente, um eine Getränkemischung zu erhalten, Zugeben eines Gases, das CO₂ umfasst, zu der Getränkemischung, um eine mit CO₂ versetzte Getränkemischung zu erhalten, Reduzieren des Sauerstoffgehalts der mit CO₂ versetzten Getränkemischung in einem ersten Behälter, um eine sauerstoffreduzierte mit CO₂ versetzte Getränkemischung zu erhalten, Ausleiten der sauerstoffreduzierten mit CO₂ versetzten Getränkemischung aus dem ersten Behälter, Bestimmen des CO₂-Gehalts der sauerstoffreduzierten mit CO₂ versetzten Getränkemischung und Zugeben von weiterem CO₂ zu der ausgeleiteten sauerstoffreduzierten mit CO₂ versetzten Getränkemischung auf der Grundlage des bestimmten CO₂-Gehalts, um ein endkarbonisiertes Getränk zu erhalten.

## Beschreibung

### Gebiet der Erfindung

Die vorliegende Erfindung betrifft die Herstellung von Getränken, insbesondere von sauerstoffarmen karbonisierten Getränken.

### Stand der Technik

In Abfüllanlagen für Getränke werden Behälter, wie beispielsweise Flaschen, Dosen, usw., in mehreren aufeinanderfolgenden Prozessschritten behandelt. Dabei werden im Allgemeinen die Prozessschritte in separaten Behandlungsstationen durchgeführt, die beispielsweise als Module eines gemeinsamen Anlagenkonzepts zusammengestellt werden können. Eine Behälterbehandlungsanlage für Glasflaschen oder Kunststoffflaschen, z. B. aus Polyethylenterephthalat (PET), Polypropylen (PEP), usw., kann beispielsweise eine Blasformeinrichtung, Füllvorrichtung, Karbonisierungsvorrichtung, Verschließvorrichtung, Etikettiervorrichtung, Verpackungsvorrichtung, Reinigungsvorrichtung, Pasteurisiervorrichtung, Inspektionsvorrichtung, usw. als separate, modular ausgeführte Behandlungsstationen umfassen. Die einzelnen Behandlungsstationen, welche aufeinanderfolgende Prozessschritte durchführen, sind dabei im Allgemeinen in Reihe hintereinander geschaltet, wobei eine oder mehrere Transportvorrichtungen den Transport der Behälter von den Behandlungsstationen zu den jeweiligen nachgeschalteten Behandlungsstationen übernehmen.

Es wird immer wichtiger bei der Getränkeherstellung den Sauerstoffgehalt bzw. im Allgemeinen den Fremdgasanteil, beispielsweise Stickstoff oder Luft, zu reduzieren, um insbesondere die Haltbarkeit der abgefüllten Getränke deutlich zu erhöhen, chemische Reaktionen mit dem Gebinde (insbesondere Dose) und Probleme beim Füllprozess zu vermeiden. Auch können so höhere Abfülltemperaturen ermöglicht werden, wodurch geringere Kosten bei der Kühlung anfallen. Einige Getränke, wie beispielsweise Bier und Limonaden, werden mit Kohlendioxid versetzt. Die Regelung/Steuerung der Entgasung zur Sauerstoffreduktion und der Karbonisierung sind jedoch hinsichtlich der Komplexität der Prozessvorgänge und Genauigkeit und Zuverlässigkeit der erreichten Werte für den Grad der Sauerstoffreduktion und Karbonisierung problematisch. So wird typischerweise bei der Herstellung von Getränken mit Sirup durch die Beimischung des Sirups nach der Entgasung von Wasser zu dem entgasten Wasser Sauerstoff eingetragen. Sehr hohe Mengen an benötigten Strippgasen oder ein relativ hoher unerwünschter Sauerstoffgehalt, der bei Abfüllung des Getränks in (beschichtete) Dosen zu einem Platzen der Dosen und Qualitätseinbußen während der Lagerung führen kann, stellen besondere Probleme dar.

Es liegt der vorliegenden Erfindung die Aufgabe zugrunde, eine im Vergleich zum Stand der Technik verlässlichere und effizientere Herstellung von karbonisierten Getränken mit wohl kontrolliertem reduziertem Sauerstoffgehalt und mit wohl kontrolliertem CO₂-Gehalt bereitzustellen.

### Beschreibung der Erfindung

Die oben genannte Aufgabe wird durch Bereitstellen eines Verfahrens zur Herstellung eines karbonisierten Getränks gelöst, wobei das Verfahren die Schritte aufweist:
Bereitstellen von sauerstoffreduziertem Wasser;
Mischen des sauerstoffreduzierten Wassers mit einer Mischungskomponente (beispielsweise Sirup, Konzentrat oder Aromastoffe), um eine Getränkemischung zu erhalten;
Zugeben eines Gases, das CO₂ umfasst (und beispielsweise N₂ umfassen kann), zu der Getränkemischung, um eine mit CO₂ versetzte Getränkemischung zu erhalten;
Reduzieren des Sauerstoffgehalts der mit CO₂ versetzten Getränkemischung in einem ersten (Strippgas-) Behälter, um eine sauerstoffreduzierte mit CO₂ versetzte Getränkemischung zu erhalten;
Ausleiten der sauerstoffreduzierten mit CO₂ versetzten Getränkemischung aus dem ersten Behälter;
Bestimmen des CO₂-Gehalts der sauerstoffreduzierten mit CO₂ versetzten Getränkemischung (beispielsweise beim oder nach dem Ausleiten in einer Auslaufleitung des ersten Behälters); und
Zugeben von weiterem CO₂ zu der ausgeleiteten sauerstoffreduzierten mit CO₂ versetzten Getränkemischung auf der Grundlage des bestimmten CO₂-Gehalts, um ein endkarbonisiertes Getränk zu erhalten (das im weiteren Prozessverlauf, beispielsweise in Flaschen oder Dosen, abgefüllt werden kann).

Wenn von sauerstoffreduziertem Wasser die Rede ist, kann damit entgastes Wasser gemeint sein, also z.B. Wasser, das durch einen Entgaser gelaufen ist.

Beispielsweise kann das Zugeben des Gases, das CO₂ umfasst und als Strippgas bei der Sauerstoffreduzierung dienen kann, zu der Getränkemischung, um die mit CO₂ versetzte Getränkemischung zu erhalten, derart erfolgen, dass die mit CO₂ versetzte Getränkemischung nicht mit CO₂ gesättigt ist. Insbesondere gilt dies für den Punkt, an welchem das Zugeben des Gases erfolgt bzw. bis zu der Stelle, an welcher es in den ersten Behälter strömt bzw. bis zu einem Einlassventil des ersten Behälters.

Es findet also erfindungsgemäß eine zumindest zweistufige Karbonisierung statt. In einer ersten Stufe wird CO₂ einer Mischung aus einem sauerstoffreduzierten Wasser und einer Mischungskomponente zugeführt, wobei dieses CO₂ insbesondere als Strippgas zum Entfernen von Sauerstoff aus der Mischung dienen kann. Sauerstoff, der durch die Mischungskomponente eingetragen wird, kann aus der Mischung, aufgrund ihrer im Allgemeinen niedrigeren Viskosität im Vergleich zur Mischungskomponente selbst (insbesondere im Fall von Sirup), besser als aus der Mischungskomponente austreten. Eine solche Sauerstoffreduzierung erfolgt in einem entsprechenden ersten Behälter, der beispielsweise unter Unterdruck, beispielsweise von 0,7 bis 0,9 bar absolut, gesetzt sein kann. Wenn der erste Behälter unter Unterdruck gesetzt ist, kann die Menge an Strippgas (CO₂ und gegebenenfalls eine weitere Gaskomponente), die der Getränkemischung zugesetzt wird, reduziert werden, da der Unterdruck ein Ausgasen des Sauerstoffs erleichtert. Auch verringern sich Aromaverluste bei Entgasen der Mischung im Vergleich zu einem Entgasen der Mischungskomponente für sich. Zudem muss durch die Verwendung von sauerstoffreduzierten Wasser im ersten Behälter weniger Sauerstoff entfernt werden, wodurch sich Aromaverluste nochmals reduzieren.

Der CO₂-Gehalt der sauerstoffreduzierten mit CO₂ versetzten Getränkemischung kann durch Messen des CO₂-Gehab in dem ersten Behälter und/oder nach Ausleiten aus dem ersten Behälter bestimmt werden. Beispielsweise kann der CO₂-Gehalt der sauerstoffreduzierten mit CO₂ versetzten Getränkemischung durch ein Volumenexpansionsverfahren, ein optisches Messverfahren oder ein membranbasiertes Messerverfahren gemessen wird. Durch eine Messung mithilfe eines geeigneten Sensors kann der CO₂-Gehalt, der maßgeblich von der konkreten Zusammensetzung und somit CO₂-Löslichkeit der Getränkemischung abhängt, sehr genau bestimmt werden. Die genaue Bestimmung des CO₂-Gehalts ermöglicht wiederum eine genaue Regelung einer weiteren CO₂-Zufuhr zur gewünschten Endkarbonisierung der Getränkemischung.

Beispielsweise wird der CO₂-Gehalt der sauerstoffreduzierten mit CO₂ versetzten Getränkemischung, die den ersten Behälter nach dem Reduzieren des Sauerstoffgehalts in dem ersten Behälter verlässt, bestimmt und, je nach bestimmter Menge des in dieser Mischung nach dem Verlassen des ersten Behälters vorhandenen CO₂ wird eine Endkarbonisierung für das fertiggestellte Getränk vorgenommen. Somit lässt sich der CO₂-Gehalt des fertigen und abzufüllenden Getränks genau und zuverlässig regeln, wodurch sich der CO₂-Bedarf reduziert.

Das Bereitstellen des sauerstoffreduzierten Wassers kann das Entgasen des Wassers in einem unter Unterdruck stehenden zweiten Behälter umfassen, wodurch auf einfach und effiziente Weise der Sauerstoffgehalt des fertigen Getränkeprodukts schon vor der Mischung von Wasser mit der Mischungskomponente reduziert werden kann.

Wie erwähnt kann der erste Behälter unter Unterdruck stehen, um ein Ausgasen von Sauerstoff aus der mit CO₂ versetzten Getränkemischung zu beschleunigen. Sowohl der Unterdruck des ersten Behälters als auch derjenige des zweiten Behälters kann mithilfe derselben Vakuumpumpe erzeugt werden, wodurch der gesamte Prozessablauf vereinfacht werden kann. Insbesondere kann es sich bei der Vakuumpumpe um eine reinigbare bzw. CIP-fähige Vakuumpumpe handeln.

Gemäß einer Weiterbildung des erfindungsgemäßen Verfahrens wird zumindest ein Teil der ausgeleiteten sauerstoffreduzierten mit CO₂ versetzten Getränkemischung, insbesondere über eine Kreislaufleitung, in den ersten Behälter zurückgeführt. So kann eine weitere Saustoffreduktion während eines wiederholten Aufenthalts der sauerstoffreduzierten mit CO₂ versetzten Getränkemischung erreicht werden. Gemäß einer weiteren Ausbildung kann in der Kreislaufleitung die Messung des Gasgehaltes an CO₂ und oder Sauerstoff, insbesondere inline, erfolgen.

Während des Zurückführens in den ersten Behälter kann weiteres CO₂ und/oder N₂ der sauerstoffreduzierten mit CO₂ versetzten Getränkemischung zugegeben werden, welches als Strippgas während der weiteren Saustoffreduktion in dem ersten Behälter dienen kann.

Gemäß einer weiteren Weiterbildung erfolgt das Zugeben des Gases, das CO₂ umfasst, zu der Getränkemischung, um die mit CO₂ versetzte Getränkemischung zu erhalten, und das Zugeben des weiterem CO₂, um das endkarbonisierte Getränk zu erhalten, aus derselben CO₂-Quelle, wodurch der gesamte Aufbau der zum Ausführen des Verfahrens verwendeten Anlage vereinfacht werden kann.

Weiterhin kann gemäß einer Weiterbildung des erfindungsgemäßen Verfahrens die Getränkemischung und/oder die mit CO₂ versetzten Getränkemischung vor dem Reduzieren des Sauerstoffgehalts der mit CO₂ versetzten Getränkemischung in dem ersten Behälter erwärmt werden, wodurch die Sauerstoffreduktion in diesem Behälter erleichtert werden kann. Hierdurch kann beispielsweise auch der Bedarf an Strippgas gesenkt werden.

Außerdem kann nicht nur der CO₂-Gehalt der den ersten Behälter verlassenden sauerstoffreduzierten mit CO₂ versetzten Getränkemischung bestimmt werden, sondern auch deren Sauerstoffgehalt. In Abhängigkeit von dem Restsauerstoffgehalt kann ein Unterdruck in dem ersten Behälter geregelt werden. So kann ein Unterdruck in dem ersten Behälter erhöht werden (der Druck wird also in dem ersten Behälter erniedrigt), wenn die Messung des Restsauerstoffgehalts der sauerstoffreduzierten mit CO₂ versetzten Getränkemischung verglichen mit einem vorbestimmten Grenzwert einen zu hohen Sauerstoffgehalt in der aus der ersten Behälter ausgeleiteten sauerstoffreduzierten mit CO₂ versetzten Getränkemischung ergibt. Weiterhin kann je nach Messwert für den Restsauerstoffgehalt in der aus dem ersten Behälter ausgeleiteten sauerstoffreduzierten mit CO₂ versetzten Getränkemischung die Menge des CO₂ beim Zugeben des Gases, das CO₂ umfasst, zu der Getränkemischung, um die mit CO₂ versetzte Getränkemischung zu erhalten, geregelt werden. So lässt sich weiter sicherstellen, dass in dem Endprodukt der gewünschte Karbonisierungsgrad und reduzierte Sauerstoffgehalt erreicht wird.

Die oben genannte Aufgabe wird auch durch Bereitstellen einer Vorrichtung zur Herstellung karbonisierter Getränke, wobei die Vorrichtung dazu ausgebildet ist, das Verfahren gemäß einem der vorhergehenden Ansprüche auszuführen, gelöst, und insbesondere durch Bereitstellen einer Abfüllanlage zur Abfüllung eines karbonisierten Getränks, insbesondere mit einer solchen Vorrichtung, wobei die Abfüllanlage umfasst:
eine Mischeinrichtung (beispielsweise eine ventilgeregelte Zuleitung von einem Reservoir für die Mischkomponente), die dazu ausgebildet ist, sauerstoffreduziertes Wasser und eine Mischungskomponente zu mischen, um eine Getränkemischung bereitzustellen;
einen ersten Behälter zur Sauerstoffentgasung der mit CO₂ versetzten Getränkemischung, um eine sauerstoffreduzierten mit CO₂ versetzte Getränkemischung bereitzustellen;
eine erste Karbonisierungseinrichtung, die dazu ausgebildet ist, die Getränkemischung mit einem Gas zu versetzen, das CO₂ enthält, um die mit CO₂ versetzte Getränkemischung bereitzustellen, und die an eine Zuleitung angeschlossen ist, die mit dem ersten Behälter verbunden ist;
eine mit dem ersten Behälter verbundene Auslaufleitung;
eine erste Messeinrichtung, die dazu ausgebildet ist, einen CO₂-Gehalts der sauerstoffreduzierten mit CO₂ versetzten Getränkemischung zu messen;
eine zweite Karbonisierungseinrichtung, die mit der Auslaufleitung verbunden ist; und
eine Steuerungs-/Regelungseinrichtung, die dazu ausgebildet ist, den Betrieb der zweiten Karbonisierungseinrichtung auf der Grundlage des von der ersten Messeinrichtung gemessenen CO₂-Gehalts zu regeln.

Die erste Messeinrichtung kann zumindest teilweise in dem ersten Behälter angeordnet sein, oder sie kann an der Auslaufleitung angeschlossen sein.

Eine CO₂-Quelle kann mit der ersten und der zweiten Karbonisierungseinrichtung verbunden sein.

Weiterhin kann die genannte Abfüllanlage einen zweiten Behälter, der zur Entgasung von Wasser ausgebildet ist, um das sauerstoffreduzierte Wasser bereitzustellen und eine (insbesondere reinigbare) Vakuumpumpe, die mit dem ersten und zweiten Behälter verbunden ist, um einen Unterdruck in diesen Behältern zu erzeugen, umfassen.

Zudem kann die Abfüllanlage eine zweite Messeinrichtung umfassen, die an der Auslaufleitung angeschlossen und dazu ausgebildet ist, einen Sauerstoffgehalt der sauerstoffreduzierten mit CO₂ versetzten Getränkemischung in der ersten Auslaufleitung zu messen, wobei die Steuerungs-/Regelungseinrichtung, dazu ausgebildet sein kann, auf der Grundlage des bestimmten Sauerstoffgehalts die Vakuumpumpe und somit den Unterdruck des ersten Behälters zu regeln, und/oder die erste Karbonisierungseinrichtung und somit die Menge des Gases beim Zugeben des Gases, das CO₂ umfasst, zu der Getränkemischung, um die mit CO₂ versetzte Getränkemischung zu erhalten, zu regeln.

Gemäß einer weiteren Weiterbildung umfasst die Abfüllanlage weiterhin eine Heizeinrichtung, die in Prozessstromrichtung vor dem ersten Behälter angeordnet ist und die dazu ausgebildet ist, die Getränkemischung und/oder die mit CO₂ versetzten Getränkemischung vor dem Reduzieren des Sauerstoffgehalts der mit CO₂ versetzten Getränkemischung in dem ersten Behälter zu erhitzen.

Während in sämtlichen oben beschriebenen Ausführungsformen der genannte erste Behälter unter Unterduck gesetzt sein kann, kann je nach konkreter Anwendung alternativ in sämtlichen oben beschriebenen Ausführungsformen in dem ersten Behälter atmosphärischer Druck oder ein Überdruck vorliegen.

Für das Zugeben von Gasen oder Gasgemischen zu Flüssigkeiten wie Getränkemischungen können im Sinne der Erfindung jegliche aus dem Stand der Technik bekannten Vorrichtungen wie Düsen, z.B. Venturidüsen, genutzt bzw. verwendet werden.

Vorliegende Erfindung umfasst auch die Herstellung von Getränken in denen Anstelle von CO₂ Lachgas oder eine Mischung aus Lachgas und CO₂ enthalten sein soll. In diesem Fall kann anstelle des CO₂ Lachgas oder eine Mischung aus Lachgas und CO₂ der Getränkemischung zugegeben werden.

Weitere Merkmale und beispielhafte Ausführungsformen sowie Vorteile der vorliegenden Erfindung werden nachfolgend anhand der Zeichnungen näher erläutert. Es versteht sich, dass die Ausführungsformen nicht den Bereich der vorliegenden Erfindung erschöpfen. Es versteht sich weiterhin, dass einige oder sämtliche der im weiteren beschriebenen Merkmale auch auf andere Weise miteinander kombiniert werden können.
Figur 1 zeigt Module einer Abfüllanlage gemäß einer Ausführungsform der vorliegenden Erfindung.
Figur 2 zeigt Module einer Abfüllanlage gemäß einer weiteren Ausführungsform der vorliegenden Erfindung.
Figur 3 zeigt ein Flussdiagramm, das ein Verfahren zur Herstellung eines karbonisierten Getränks gemäß einer Ausführungsform der vorliegenden Erfindung veranschaulicht.
Figur 4 zeigt ein Flussdiagramm, das ein Verfahren zur Herstellung eines karbonisierten Getränks gemäß einer weiteren Ausführungsform der vorliegenden Erfindung veranschaulicht.

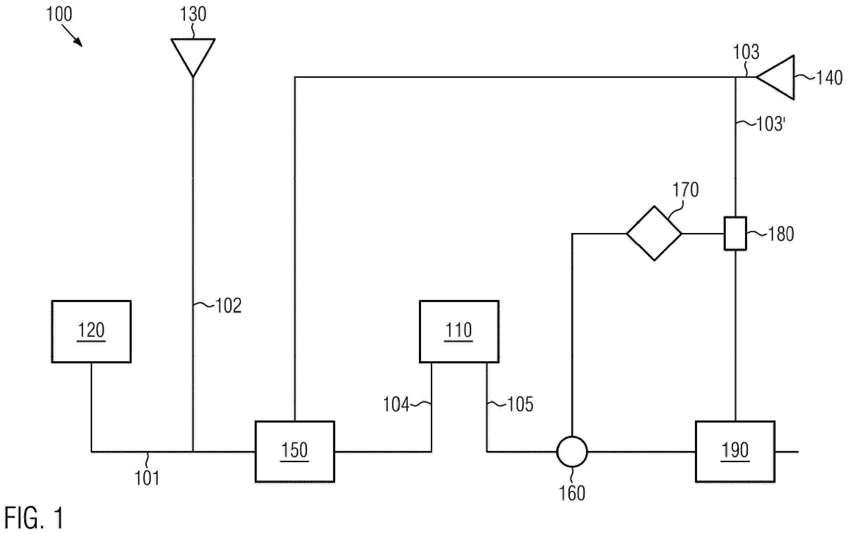

Die vorliegende Erfindung stellt ein Verfahren und eine Vorrichtung sowie Abfüllanlage zur Herstellung von Getränken, insbesondere von sauerstoffarmen karbonisierten Getränken, zur Verfügung. Hierbei erfolgt eine zumindest zweistufige Reduktion von Sauerstoff, nämlich zunächst eine Reduktion von Sauerstoff im für das Getränk verwendeten Wasser und dann eine Reduktion von Sauerstoff einer Getränkemischung aus dem sauerstoffreduzierten Wasser und einer gewählten Mischungskomponente, wie beispielsweise Sirup, Konzentrat Aromastoff, etc. Im Vergleich zum Stand der Technik können ein gewünschter Sauerstoffgehalt und CO₂-Gehalt des fertiggestellten zur Abfüllung bereitgestellten Produkts verlässlicher erreicht werden, und es kann die Menge des zur Sauerstoffreduzierung zu verwendenden Stripgases verringert werden. Ein Beispiel für eine Vorrichtung beziehungsweise Abfüllanlage 100 zur Herstellung solcher Getränke ist in Figur 1 gezeigt.

Die in Figur 1 gezeigte Abfüllanlage 100 umfasst einen ersten Behälter (Stripgasbehälter) 110, der zur Reduktion von Sauerstoff in einer mit CO₂ versetzten Getränkemischung dient. In einem zweiten Behälter 120 wird Wasser, das zur Herstellung der mit CO₂ versetzten Getränkemischung dient, entgast, um den Sauerstoffgehalt des Wassers zu reduzieren (erste Sauerstoffreduzierungsstufe). Das entgaste Wasser verlässt den zweiten Behälter 120 über die Leitung 101 und dem entgasten Wasser wird aus einem Reservoir 130 über die Leitung 102 eine Mischungskomponente (wie etwas Sirup, Konzentrat oder Aromastoffe) zugeführt. Die Leitung 102 kann mit einem entsprechenden Mischventil versehen sein und kann mit diesem Ventil als Mischungseinrichtung angesehen werden. Weiterhin umfasst die Abfüllanlage 100 eine CO₂-Quelle 140 zur Lieferung von CO₂ über die Leitung 103. Die CO₂-Quelle 140 kann um eine N₂-Quelle (nicht in Figur 1 gezeigt) ergänzt werden. In einer ersten Karbonisierungseinrichtung 150, die ein Regelventil umfassen kann, wird CO₂ aus der CO₂-Quelle 140 (und gegebenenfalls N2) der Mischung aus dem aus dem zweiten Behälter 120 gelieferten entgasten Wasser und der aus dem Reservoir 130 gelieferten Mischungskomponente zugeführt (erste Karbonisierungsstufe).

Die so hergestellte mit CO₂ versetzte Getränkemischung wird über eine Leitung 104 in den ersten Behälter 110 geleitet, in dem einer Reduktion des Sauerstoffgehalts mithilfe des als Strippgas dienenden CO₂ erfolgt (zweite Sauerstoffreduzierungsstufe). Nach erfolgter Reduktion des Sauerstoffs in der CO₂ versetzte Getränkemischung in dem ersten Behälter 110 verlässt die Getränkemischung den ersten Behälter 110 über die Auslaufleitung 105.

In der Auslaufleitung 105 ist eine Messeinrichtung 160 zur Messung des CO₂-Gehalts der sauerstoffreduzierten mit CO₂ versetzten Getränkemischung aus dem ersten Behälter 110 vorgesehen. Es kann jedoch bevorzugt sein, die Messeinrichtung 160 zumindest teilweise in dem ersten Behälter zum Messen des CO₂-Gehalts der sauerstoffreduzierten mit CO₂ versetzten Getränkemischung in dem ersten Behälter 110 anzuordnen. Das Messergebnis wird einer Steuerungs-/Regelungseinrichtung 170 zugeführt. Diese Steuerungs-/Regelungseinrichtung 170 kann eine Dosiereinrichtung 180, beispielsweise ein Regelventil, regeln, durch die über eine Leitung 103' aus der CO₂-Quelle 140 stammendes CO₂ strömen kann. Dieses CO₂ kann dann auf der Grundlage des Messergebnisses, das von der Messeinrichtung 160 geliefert wird, in einer zweiten Karbonisierungseinrichtung 190 der sauerstoffreduzierten mit CO₂ versetzten Getränkemischung zugesetzt werden (zweite Karbonisierungsstufe, Endkarbonisierung). Die endkarbonisierte Getränkemischung kann sodann einem Puffertank und/oder Abfüller (nicht in Figur 1 gezeigt) zur Abfüllung, beispielsweise, in Flaschen oder Dosen, zugeführt werden. Bei dem Abfüller kann es sich um eine Füllmaschine handeln, welche eine Vielzahl von Füllstationen aufweist, um gleichzeitig eine Vielzahl von Behältern abzufüllen.

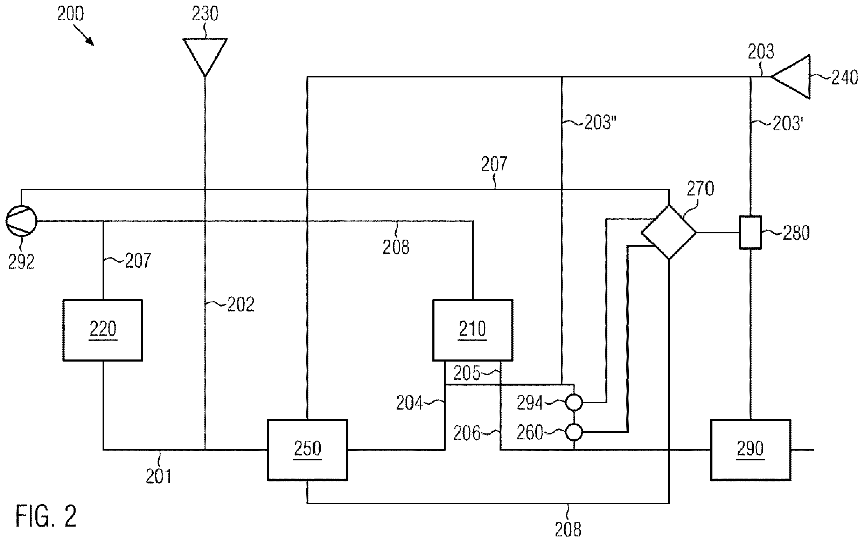

Eine weitere Ausführungsform einer erfindungsgemäßen Vorrichtung beziehungsweise Abfüllanlage 200 ist in Figur 2 gezeigt. Die in Figur gezeigte Abfüllanlage 200 umfasst einen ersten Behälter (Strippgasbehälter) 210, der zur Reduktion von Sauerstoff in einer mit CO₂ versetzten Getränkemischung dient. In einem zweiten Behälter 220 wird Wasser, das zur Herstellung der mit CO₂ versetzten Getränkemischung dient, entgast, um den Sauerstoffgehalt des Wassers zu reduzieren (erste Sauerstoffreduzierungsstufe).

Sowohl die Entgasung des Wassers in dem zweiten Behälter 220 als auch die Entgasung von Sauerstoff in der mit CO₂ versetzten Getränkemischung in dem ersten Behälter 210 erfolgt unter Unterdruck, der mithilfe ein und derselben (insbesondere reinigbaren) Vakuumpumpe 292 erfolgen, die über die Leitung 207 mit dem zweiten Behälter 220 und die Leitung 208 mit dem ersten Behälter 210 verbunden ist. Die Entgasung von Sauerstoff in der mit CO₂ versetzten Getränkemischung in dem ersten Behälter 210 erfolgt beispielsweise bei einem Unterdruck von 0,7 bis 0,9 bar. Die Wahl des Unterdrucks in dem ersten Behälter 210 (Stripgasbehälter) kann in Abhängigkeit vom Getränkeprodukt, insbesondere dem Gehalt und der Zusammensetzung der leichtflüchtigen beziehungsweise geschmacksbildenden Aromen, erfolgen. Sind relativ große (kleine) Mengen an leicht flüchtigen Aromastoffen vorhanden, so wird vorteilhafterweise ein relativ geringer (hoher) Unterdruck gewählt. Prinzipiell kann durch das Anlegen eines Unterdrucks im Vergleich zum atmosphärischen Druck bei gleicher Menge an CO₂-Gas ein größerer Volumenstrom in den Stripgasbehälter hinein erreicht werden, wodurch die Entgasungseffizienz erhöht werden kann, wobei die Entgasungseffizienz desto höher liegt, je größer der Unterdruck ist.

Das entgaste Wasser verlässt den zweiten Behälter 220 über die Leitung 201 und dem entgasten Wasser wird aus einem Reservoir 230 über die Leitung 202 eine Mischungskomponente (wie etwas Sirup, Konzentrat oder Aromastoffe) zugeführt. Weiterhin umfasst die Abfüllanlage 200 eine CO₂-Quelle 240 zur Lieferung von CO₂ über die Leitung 203. Die CO₂-Quelle 240 kann um einen N₂-Quelle (nicht in Figur 2 gezeigt) ergänzt werden. In einer ersten Karbonisierungseinrichtung 250, die ein Regelventil umfassen kann, wird CO₂ aus der CO₂-Quelle 240 (und gegebenenfalls N2) der Mischung aus dem aus dem zweiten Behälter 220 gelieferten entgasten Wasser und der aus dem Reservoir 230 gelieferten Mischungskomponente zugeführt (erste Karbonisierungsstufe).

Die so hergestellte mit CO₂ versetzte Getränkemischung wird über eine Leitung 204 in den ersten Behälter 210 geleitet, in dem eine Reduktion des Sauerstoffgehalts erfolgt (zweite Sauerstoffreduzierungsstufe). Nach erfolgter Reduktion des Sauerstoffs in der mit CO₂ versetzten Getränkemischung in dem ersten Behälter 210 verlässt die Getränkemischung den ersten Behälter 210 über die Auslaufleitung 205. Die Auslaufleitung ist Teil einer Ringleitung 206, über die zumindest ein Teil der sauerstoffreduzierten mit CO₂ versetzten Getränkemischung in den ersten Behälter 210 zur weiteren Sauerstoffreduktion zurückgeleitet werden kann.

In der Ringleitung 206 ist eine Messeinrichtung 260 zur Messung des CO₂-Gehalts der sauerstoffreduzierten mit CO₂ versetzten Getränkemischung aus dem ersten Behälter 210 vorgesehen. Alternativ hierzu kann die Messeinrichtung 260 auch in der Auslaufleitung 205, beispielsweise vor der zweiten Karbonisierungseinrichtung 290 angeordnet sein. Dies kann vorteilhaft sein, falls in der Ringleitung 206 zu viel ungelöstes Gas vorhanden ist, welches die Messung erschweren würde. Es kann jedoch bevorzugt sein, die Messeinrichtung 260 zumindest teilweise in dem ersten Behälter zum Messen des CO₂-Gehalts der sauerstoffreduzierten mit CO₂ versetzten Getränkemischung in dem ersten Behälter 210 anzuordnen. Das Messergebnis wird einer Steuerungs-/Regelungseinrichtung 270 zugeführt. Diese Steuerungs-/Regelungseinrichtung 270 kann eine Rückleitung zumindest eines Teils der sauerstoffreduzierten mit CO₂ versetzte Getränkemischung in den ersten Behälter 210 oder in die Zulaufleitung 204 zur weiteren Sauerstoffreduktion auf der Grundlage des von der Messeinrichtung 260 gelieferten Messwerts für den CO₂-Gehalt, beispielsweise über geeignete Regelventile, bewirken. Weiterhin kann die Steuerungs-/Regelungseinrichtung 270 je nach gemessenen CO₂-Gehalt über eine Steuerleitung 208 die Vorkabonisierung in der ersten Karbonisierungseinrichtung 250 regeln. Diese Steuerungs-/Regelungseinrichtung 270 kann zudem eine Dosiereinrichtung 280, beispielsweise ein Regelventil, regeln, durch die über eine Leitung 203' aus der CO₂-Quelle 140 stammendes CO₂ strömen kann. Dieses CO₂ kann dann auf der Grundlage des Messergebnisses, das von der Messeinrichtung 260 geliefert wird, in einer zweiten Karbonisierungseinrichtung 290 der sauerstoffreduzierten mit CO₂ versetzten Getränkemischung zugesetzt werden (zweite Karbonisierungsstufe, Endkarbonisierung).

Die endkarbonisierte Getränkemischung kann sodann einem Puffertank und/oder einem Abfüller (nicht in Figur 2 gezeigt) zur Abfüllung, beispielsweise, in Flaschen oder Dosen, zugeführt werden. Außerdem kann über eine Leitung 203" bedarfsweise weiteres CO₂, in die Ringleitung 206 eingespeist werden. Diese Leitung 203" kann alternativ oder zusätzlich mit einer Quelle für ein anderes Strippgas, beispielsweise N₂, verbunden sein.

Weiterhin ist in der Ringleitung 206 eine weitere Messeinrichtung 294 zur Messung des Sauerstoffgehalts der sauerstoffreduzierten mit CO₂ versetzten Getränkemischung aus dem ersten Behälter 210 eingebunden. Alternativ hierzu kann die Messeinrichtung 294 auch in der Auslaufleitung 205, beispielsweise vor der zweiten Karbonisierungseinrichtung 290 angeordnet sein. Dies kann vorteilhaft sein, falls in der Ringleitung 206 zu viel ungelöstes Gas vorhanden ist, welches die Messung erschweren würde. Auch diese weitere Messeinrichtung 294 ist mit der Steuerungs-/Regelungseinrichtung 270 verbunden, um dieser Messergebnisse für den Sauerstoffgehalt zu liefern. Auf der Grundlage dieser Messergebnisse für den Sauerstoffgehalt der sauerstoffreduzierten mit CO₂ versetzten Getränkemischung kann die Steuerungs-/Regelungseinrichtung 270 über eine Steuerleitung 207 den Betrieb der Vakuumpumpe 292 regeln.

Sowohl in der in Figur 1 gezeigten Ausführungsform als auch in der in Figur 2 gezeigten Ausführungsform kann eine Heizeinrichtung beispielsweise in einer oder mehreren der Leitungen 101, 201, 104, 204 zum Erwärmen des entgasten Wassers beziehungsweise der Getränkemischung vor der Lieferung derselben in den ersten Behälter 110, 210 eingebunden sein.

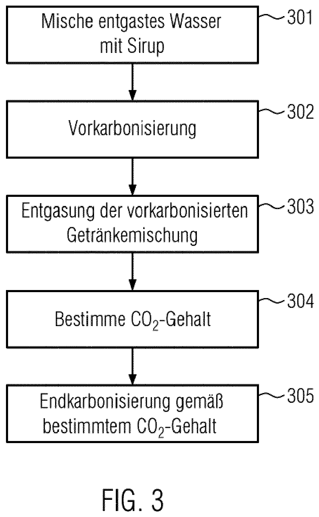

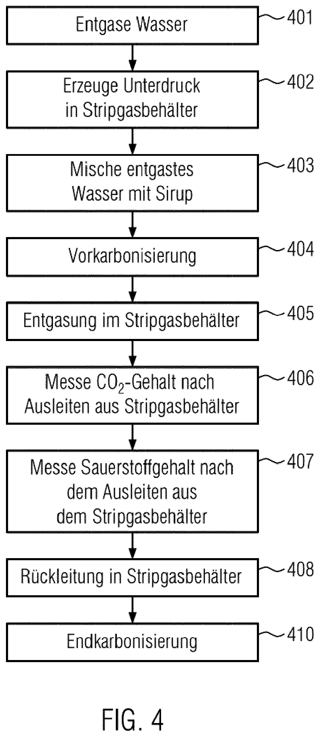

Die in den Figuren 1 und 2 gezeigten oder ähnliche Vorrichtungen/Abfüllanlagen 100, 200 können zum Ausführen eines erfindungsgemäßen Verfahrens zur Herstellung eines karbonisierten Getränks Verwendung finden. In den Figuren 3 und 4 sind beispielhafte Ausführungsformen eines solchen Verfahrens veranschaulicht, das in den in den Figuren 1 und 2 gezeigten Vorrichtungen/Abfüllanlagen 100, 200 implementiert sein kann.

In der in Figur 3 gezeigten Ausführungsform wird in Schritt 301 entgastes Wasser mit Sirup (oder einer anderen Mischungskomponente) gemischt. Das Mischungsverhältnis kann beispielsweise bei einem Anteil Sirup zu 3 bis 10 Anteilen Wasser liegen. Die Mischung von entgastem Wasser und der Mischungskomponente wird vorkarbonisiert 302, ehe sie in einen Behälter zur Entgasung 303 geleitet wird. Die Vorkarbonisierung kann derart erfolgen, dass das gesamte zugesetzte CO₂ oder nur ein Teil davon in der Mischung aus entgastem Wasser und Sirup gelöst ist. Vor dem Einleiten in den Behälter kann eine Erwärmung stattfinden. Die entgaste vorkarbonisierte Getränkemischung wird aus dem Behälter ausgeleitet, und es wird der CO₂-Gehalt dieser ausgeleiteten Getränkemischung bestimmt 304. Diese Bestimmung des CO₂-Gehalts kann insbesondere durch Messen desselben erfolgen. Auch kann die Bestimmung des CO₂-Gehalts der Getränkemischung durch eine entsprechende Messung in dem Behälter erfolgen. Eine Endkarbonisierung 305 der Getränkemischung erfolgt dann nach Maßgabe des bestimmten CO₂-Gehalts, derart dass der gewünschte CO₂-Gehalt im fertiggestellten und abzufüllenden Produkt erreicht wird.

In der in Figur 4 gezeigten Ausführungsform wird Wasser in einem unter Unterdruck stehenden Behälter entgast 401, und in einem Stripgasbehälter wird ein Unterdruck erzeugt 402. Der Unterdruck kann in beiden Behältern jeweils mit derselben Vakuumpumpe erzeugt werden. Der Unterdruck im Stripgasbehälter kann bei etwa 0, 7 bis 0,9 bar liegen. In Schritt 403 wird das entgaste Wasser mit Sirup (oder einer anderen Mischungskomponente) gemischt. In Schritt 404 erfolgt eine Vorkarbonisierung der Mischung aus entgastem Wasser und Sirup durch Zuführen von CO₂ aus einer CO₂-Quelle. Die Vorkarbonisierung kann derart erfolgen, dass das gesamte zugesetzte CO₂ oder nur ein Teil davon in der Mischung aus entgastem Wasser und Sirup gelöst ist. Die vorkarbonisierte Getränkemischung wird in dem Stripgasbehälter entgast 405, um den Sauerstoffgehalt weiter zu reduzieren. Vor dem Einleiten in den Stripgasbehälter kann eine Erwärmung der Getränkemischung vor oder nach der Vorkarbonisierung 404 stattfinden.

Nach der Entgasung in dem Strippgasbehälter wird die entgaste vorkarbonisierte Getränkemischung ausgeleitet, und es wird ihr CO₂-Gehalt gemessen 406 und es wird ihr Sauerstoffgehalt gemessen 407. Die Messung des CO₂-Gehalts der Getränkemischung kann alternativ oder zusätzlich in dem Behälter erfolgen. Die Messergebnisse werden einer Steuerungs-/Regelungseinrichtung zugeführt. Auf der Grundlage der Messergebnisse kann der zur Entgasung des Wassers und der vorkarbonisierten Getränkemischung erzeugte Unterdruck sowie die Menge des in der Vorkarbonisierung 404 zugesetzten CO₂ geregelt werden. Ist der nach dem Stripgasbehälter gemessene Sauerstoffgehalt zu hoch, kann der Druck weiter gesenkt werden. Weiterhin kann auf der Grundlage der Messergebnisse zumindest ein Teil der entgasten mit CO₂ versetzten Getränkemischung in den Strippgasbehälter zur weiteren Entgasung zurückgeleitet werden 408. Dieses kann unter weiterer Zusetzung eines Strippgases, wie weiteren CO₂ oder N₂ oder Sterilluft, geschehen. Schließlich erfolgt auf der Grundlage der Messergebnisse für den CO₂-Gehalt eine Endkarbonisierung 410 des abzufüllenden Produkts.

In den oben beschriebenen Verfahren und mithilfe der oben beschriebenen Module einer Abfüllanlage können die jeweils erzeugten Mengen an endkarbonisiertem Fertiggetränk und insgesamt zugeführtem CO₂ kontinuierlich überwacht und separat aufsummiert werden. Die insgesamt zugeführte Menge an CO₂ setzt sich aus der restlichen Menge an CO₂ in der Getränkemischung nach dem Strippgasbehälter (entspricht der Differenz von der in der Vorkarbonisierung zugeführten Menge an CO₂ und der im Strippgasbehälter abgeführten Menge an CO₂) und der in der Endkarbonisierung zugeführten Menge zusammen. Die Menge an CO₂, die zur Endkarbonisierung zugeführt wird, kann mit hoher Genauigkeit so geregelt werden, dass das Summenverhältnis von gesamter CO₂-Menge zu Fertiggetränkmenge dem gewünschten Endgehalt an CO₂ im fertig ausgemischten Getränke entspricht. Hierbei kann es vorteilhaft sein, in bestimmten Zeitintervallen oder bei Erreichen bestimmter Summenwerte die jeweiligen Summen (für CO₂- und Fertiggetränkmenge) entsprechend einem gewünschten Verhältnis von Fertiggetränkmenge zu CO₂-Menge zu kürzen, wodurch die Mess-/Regelungsgenauigkeit erhöht werden kann, da auch kleine Abweichungen in der Ausregelung im Verhältnis zu den Mengensummen aufgrund des Kürzens derselben erkennbar werden.

Weiterhin kann in sämtlichen Ausführungsformen der Massenstrom des zur Reduktion des Sauerstoffgehalts als Strippgas dienenden CO₂ unter der Ausnutzung einer Druckdifferenz zwischen dem CO₂-Gasdruck in einer CO₂-Quelle und dem Druck in dem Stripgasbehälter mithilfe eines Stellorgans, wie etwa eine Regelventils, geregelt/gesteuert werden. Für die Ermittlung der Menge des als Strippgas dienenden CO₂ kann eine Vorbelastung des entgasten Wassers, das in dem Stripgasbehälter (beispielsweise dem in Figur 1 gezeigten ersten Behälter 110 oder dem in Figur 2 gezeigten zweiten Behälter 120) vorkarbonisiert wird und beispielsweise von dem in Figur 1 gezeigten zweiten Behälter 120 oder dem in Figur 2 gezeigten zweiten Behälter 220 geliefert wird, berücksichtigt werden. Diese Vorbelastung resultiert aus dem Entgasen des beispielsweise in dem in Figur 1 gezeigten zweiten Behälter 120 oder in dem in Figur 2 gezeigten zweiten Behälter 220 bereitgestellten Wassers mithilfe von CO₂.

In den in den Figuren 3 und 4 gezeigten beispielhaften Verfahren können einzelne Verfahrensschritte, wenn geeignet und gewünscht, in einer anderen als in der gezeigten Reihenfolge ausgeführt werden.

Während in sämtlichen mit Bezug auf die Figuren 1 bis 4 beschriebenen Ausführungsformen der genannte erste Behälter unter Unterduck gesetzt sein kann, kann je nach konkreter Anwendung alternativ in diesen Ausführungsformen in dem ersten Behälter atmosphärischer Druck oder ein Überdruck vorliegen.

## Patentansprüche

1. Verfahren zur Herstellung eines karbonisierten Getränks, mit den Schritten:
Bereitstellen von sauerstoffreduziertem Wasser;
Mischen des sauerstoffreduzierten Wassers mit einer Mischungskomponente, um eine Getränkemischung zu erhalten;
Zugeben eines Gases, das CO₂ umfasst, zu der Getränkemischung, um eine mit CO₂ versetzte Getränkemischung zu erhalten;
Reduzieren des Sauerstoffgehalts der mit CO₂ versetzten Getränkemischung in einem ersten Behälter (110, 210), um eine sauerstoffreduzierte mit CO₂ versetzte Getränkemischung zu erhalten;
Ausleiten der sauerstoffreduzierten mit CO₂ versetzten Getränkemischung aus dem ersten Behälter (110, 210);
Bestimmen des CO₂-Gehalts der sauerstoffreduzierten mit CO₂ versetzten Getränkemischung; und
Zugeben von weiterem CO₂ zu der ausgeleiteten sauerstoffreduzierten mit CO₂ versetzten Getränkemischung auf der Grundlage des bestimmten CO₂-Gehalts, um ein endkarbonisiertes Getränk zu erhalten.

2. Das Verfahren gemäß Anspruch 1, in dem der CO₂-Gehalt der sauerstoffreduzierten mit CO₂ versetzten Getränkemischung durch Messen des CO₂-Gehalts in dem ersten Behälter (110, 210) und/oder nach Ausleiten aus dem ersten Behälter (110, 210) bestimmt wird.

3. Das Verfahren gemäß Anspruch 2, in dem der CO₂-Gehalt der sauerstoffreduzierten mit CO₂ versetzten Getränkemischung durch ein Volumenexpansionsverfahren, ein optisches Messverfahren oder ein membranbasiertes Messerverfahren gemessen wird.

4. Das Verfahren gemäß einem der vorhergehenden Ansprüche, in dem das Bereitstellen des sauerstoffreduzierten Wassers das Entgasen des Wassers in einem unter Unterdruck stehenden zweiten Behälter (120, 220) umfasst.

5. Das Verfahren gemäß einem der vorhergehenden Ansprüche, in dem der erste Behälter (110, 210) unter Unterdruck steht.

6. Das Verfahren gemäß Anspruch 5, in dem der Unterdruck des ersten Behälters (110, 210) und des zweiten Behälters (120, 220) mithilfe derselben Vakuumpumpe (292) erzeugt wird.

7. Das Verfahren gemäß einem der vorhergehenden Ansprüche, in dem zumindest ein Teil der ausgeleiteten sauerstoffreduzierten mit CO₂ versetzten Getränkemischung, insbesondere über eine Kreislaufleitung (206), in den ersten Behälter (110, 210) zurückgeführt wird.

8. Das Verfahren gemäß Anspruch 7, weiterhin mit Zugeben von CO₂ und/oder N₂ umfassendem Gas zu der sauerstoffreduzierten mit CO₂ versetzten Getränkemischung während des Zurückführens in den ersten Behälter (110, 210).

9. Das Verfahren gemäß einem der vorhergehenden Ansprüche, weiterhin mit Erhitzen der Getränkemischung und/oder der mit CO₂ versetzten Getränkemischung vor dem Reduzieren des Sauerstoffgehalts der mit CO₂ versetzten Getränkemischung in dem ersten Behälter (110, 210).

10. Vorrichtung (100, 200) zur Herstellung karbonisierter Getränke, wobei die Vorrichtung (100, 200) dazu ausgebildet ist, das Verfahren gemäß einem der vorhergehenden Ansprüche auszuführen.

11. Abfüllanlage (100, 200) zur Abfüllung eines karbonisierten Getränks, insbesondere mit der Vorrichtung gemäß Anspruch 10, wobei die Abfüllanlage umfasst:
eine Mischeinrichtung, die dazu ausgebildet ist, sauerstoffreduziertes Wasser und eine Mischungskomponente zu mischen, um eine Getränkemischung bereitzustellen;
einen ersten Behälter (110, 210) zur Sauerstoffentgasung der mit CO₂ versetzten Getränkemischung, um eine sauerstoffreduzierten mit CO₂ versetzte Getränkemischung bereitzustellen;
eine erste Karbonisierungseinrichtung (150, 250), die dazu ausgebildet ist, die Getränkemischung mit einem Gas zu versetzen, das CO₂ enthält, um die mit CO₂ versetzte Getränkemischung bereitzustellen, und die an eine Zuleitung (204) angeschlossen ist, die mit dem ersten Behälter (110, 210) verbunden ist;
eine mit dem ersten Behälter (110, 210) verbundene Auslaufleitung 105, 205);
eine erste Messeinrichtung (160, 260), die dazu ausgebildet ist, einen CO₂-Gehalts der sauerstoffreduzierten mit CO₂ versetzten Getränkemischung zu messen;
eine zweite Karbonisierungseinrichtung (190, 290), die mit der Auslaufleitung (105, 205) verbunden ist; und
eine Steuerungs-/Regelungseinrichtung (170, 270), die dazu ausgebildet ist, den Betrieb der zweiten Karbonisierungseinrichtung (190, 290) auf der Grundlage des von der ersten Messeinrichtung gemessenen CO₂-Gehalts zu regeln.

12. Die Abfüllanlage (100, 200) gemäß Anspruch 11, in der die erste Messeinrichtung (160, 260) zumindest teilweise in dem ersten Behälter (110, 210) angeordnet ist oder an der Auslaufleitung (105, 205) angeschlossen ist.

13. Die Abfüllanlage (100, 200) gemäß Anspruch 11 oder 12, weiterhin mit
einem zweiten Behälter (120, 220), der zur Entgasung von Wasser ausgebildet ist, um das sauerstoffreduzierte Wasser bereitzustellen; und
einer Vakuumpumpe (292), die mit dem ersten Behälter (110, 120) und dem zweiten Behälter (120, 220) verbunden ist, um einen Unterdruck zu erzeugen.

14. Die Abfüllanlage (100, 200) gemäß Anspruch 11, 12 oder 13, weiterhin mit
einer zweiten Messeinrichtung (294), die an der Auslaufleitung (105, 205) angeschlossen und dazu ausgebildet ist, einen Sauerstoffgehalt der sauerstoffreduzierten mit CO₂ versetzten Getränkemischung in der ersten Auslaufleitung (205, 205) zu messen; und wobei die Steuerungs-/Regelungseinrichtung (170, 270), dazu ausgebildet ist, auf der Grundlage des bestimmten Sauerstoffgehalts
a) die Vakuumpumpe (292) und somit den Unterdruck des ersten Behälters (110, 210) zu regeln, und/oder
a) die erste Karbonisierungseinrichtung und somit die Menge des Gases beim Zugeben des Gases, das CO₂ umfasst, zu der Getränkemischung, um die mit CO₂ versetzte Getränkemischung zu erhalten, zu regeln.

15. Die Abfüllanlage (100, 200) gemäß einem der Ansprüche 12 bis 14, weiterhin mit
einer an den ersten Behälter (110, 210) angeschlossenen Ringleitung (206), die die Auslaufleitung umfasst, und einer Gaszuführeinrichtung, die zum Zuführen von CO₂ und/oder N₂ zu dem in der Ringleitung (206) geleiteten sauerstoffreduzierten mit CO₂ versetzten Getränkemischung ausgebildet ist; und/oder
einer vor dem ersten Behälter (110, 210) angeordneten Heizeinrichtung, die dazu ausgebildet ist, die Getränkemischung und/oder die mit CO₂ versetzten Getränkemischung vor dem Reduzieren des Sauerstoffgehalts der mit CO₂ versetzten Getränkemischung in dem ersten Behälter (110, 210) zu erhitzen.
